# EUROPEAN PATENT SPECIFICATION

(11) **EP 0 908 123 B1**
(45) Date of publication and mention of the grant of the patent: **02.01.2004**
(21) Application number: 98870209.8
(22) Date of filing: 06.10.1998
(51) Int. Cl.: A47C 27/14, B29C 44/56

(54) **Process for manufacturing a body supporting element and such a body supporting element**
Verfahren zum Herstellen einer Körperstütze und solche Körperstütze
Procédé de fabrication d'un support de corps humain et un tel support

(30) Priority: 06.10.1997 NL 1007212
(43) Date of publication of application: 14.04.1999
(73) Proprietor: Recticel Nederland B.V., 4041 CL Kesteren (NL)
(72) Inventor: Rieken, Renerius Ludovicus Maria, 4041 CL Kesteren (NL)
(74) Representative: Van Reet, Joseph

(56) References cited:
- WO-A-89/07411
- FR-A- 2 588 846
- US-A- 2 865 435
- US-A- 4 879 776

## Description

The invention concerns a process for manufacturing body supporting, flexible foam elements which are provided at a main surface with a studded profile having varying stud height, which process starts from a block of foam material, provided with a first and a second main surface, whereby this block of foam material is at least locally deformed in that it is clamped between two deformation elements provided with a studded profile, whereby between both deformation elements, a cutting element is mounted, that cuts the block of foam material in the site of the deformed part, in a direction that is mainly parallel to the first and second main surfaces, so as to obtain a first and a second block half which form said foam elements, whereby the first block half comprises on the one hand the first main surface, and on the other hand a third main surface, that is provided with said studded profile, and whereby the second block half comprises on the one hand the second main surface, and on the other hand a fourth main surface, that is also provided with said studded profile.

Both block halves obtained in this process may in themselves be used as a body supporting element, for example as a mattress or pillow or the like, or they may for example also be combined with other elements, for example as a cover plate with a foam or spring core. According to the invention, it is in particular specifically anticipated to combine two body supporting elements or block halves in particular into a mattress or a pillow, by connecting these block halves such, that the first and second main surfaces face each other, and the third and fourth main surfaces are turned away from each other.

From US-A-4 879 776 a process is known for cutting, from a block of foam material two body supporting elements provided with a studded profile, more particularly foam plates. In this process, the block of foam material is led between two rollers provided with protruding fingers, and thus compressed. By means of a cutting knife mounted between the rollers, the compressed block of foam material is then cut, thus obtaining two foam plates with a studded profile. In order to obtain a studded profile with a varying stud height, in the process according to US-A-4 879 776, plates are screwed on the ends of a number of the fingers of the rollers, such that these have a greater length. At the site of these longer fingers, the block of foam material is more strongly compressed, and thus a higher studded profile is obtained.

A disadvantage of the process according to US-A-4 879 776 is, that when a changeover to another studded profile is required, the length of the individual fingers on the rollers has to be adapted, which is a rather time-consuming procedure. A further important disadvantage is, that the circumferential position of the rollers and the position of the blocks of foam material should each time be accurately adjusted to each other, so that the studded profile is located in the right site on both foam plates. Finally, the circumference of the rollers should correspond with the length of the foam plates to be manufactured, since the total studded profile which should be applied to the foam plates, must also be provided on the circumference of the rollers, more particularly with corresponding differences in stud height. Thus when foam plates of a different length have to be manufactured, each time other rollers must consequently be used.

It is now the aim of the invention to provide a process for manufacturing body supporting, flexible foam elements, provided with a studded profile of varying stud height, which offers a solution for the above mentioned disadvantages, and which more particularly allows to obtain with one and the same studded profile on the deformation elements or rollers, foam plates with different studded profiles.

For this purpose, the process according to the invention is thereto characterised in that said variation in stud height is at least partially obtained by applying in a first manufacturing step, in at least one of the main surfaces of the block of foam material, recesses with a Varying mutual distance and/or size and/or depth, whereby the block of foam material thus provided with recesses, is cut in a second manufacturing step to said block halves.

According to the invention, it was found that by applying recesses in one or more main surfaces of the block of foam material, during the cutting of this block between the deformation elements provided with a studded profile, automatically a studded profile with varying stud height is obtained, without necessitating thereto that the studded profile on the deformation elements show a corresponding varying stud height. In other words, in the process according to the invention, studded profiles with a varying stud height can yet be realised with a constant stud height on the deformation elements.

In the process according to US-A-4 879 776, after the manufacturing of the foam plates with the varying stud height, the studs are levelled down so as to obtain a flat lying surface again. Although this is also possible in the process according to the invention, it is the intention of the present invention to manufacture in particular body supporting elements for mattresses, pillows and the like, which are provided with main surfaces with a three-dimensional contour, so that for example, in the case of a mattress, the latter at hip height has a larger thickness than at the head end height. The processes thereto, known from the art up to now, are rather time-consuming and therefore expensive. Further, for the benefit of ventilation, dissipation of moisture and heat, it is often desired that the body supporting element is provided with ducts that extend mainly parallel to the main surfaces of the body supporting element. After manufacturing the core of the body supporting element, which core is mostly manufactured from foam plastic or foam rubber, generally a tick is stretched around the core, and possibly on the site of the main surfaces, a fleece is applied, through which the body supporting element feels soft.

In the process according to the invention, the third and fourth main surfaces of the respective block halves are provided with a studded profile which provides such a soft surface, that when these main surfaces form the surfaces of a mattress, for example in that two block halves are attached with the first and second main surfaces facing each other, a polyester, polyether, or woollen fleece might be omitted. The recesses applied in the first and/or second main surface further form ventilating ducts or ventilation rooms which can provide the required cooling and/or ventilation.

The invention thus offers an economically advantageous process for manufacturing body supporting elements, whereby in a simple way a three-dimensional surface contour can be realised, and whereby the body supporting elements obtained in the process are provided with ducts for ventilation, moisture dissipation and heat dissipation and moreover feel soft, without thereto necessitating a polyester, polyether, or woollen fleece.

According to a further elaboration of the process, the height of the studded profile may not only be influenced by the recesses in the block of foam material, but also by placing, in the second manufacturing step, during the deformation of the block of foam material, a flexible material part on and/or under the block of foam material, and deforming it together with the block of foam material. Through this, at the height of the flexible material part, the block of foam material is further deformed, through which at the cutting of the deformed block of foam material a studded profile with a larger amplitude is obtained. In this way, it may be achieved that not only in the longitudinal direction of the mattress, the thickness thereof is varied, but also in the transverse direction. In this way, for example, a mattress may be formed which at hip height has the greatest thickness and at head and foot height has a smaller thickness, or the inverse. By this greater thickness at the site of the hips, possible pit formation in the mattress can be compensated. The stud height may further also be influenced, in a continuous way, in the width, by leading the blocks of foam material during the cutting between rollers with studs which at the ends of the rollers are for example higher than in the middle. In the circumferential direction of the rollers, on the other hand, the stud height preferably remains constant, since otherwise a correct positioning of the rollers with respect to the blocks of foam material is always required.

The invention also concerns a body supporting flexible foam element with two main surfaces, one of which is provided with a studded profile with a varying stud height, whereby in the other main surface, which is located opposite the main surface provided with a studded profile, recesses are applied with a varying mutual distance and/or size and/or depth. In this body supporting element, the variation in stud height on the main surface provided with a studded profile, more particularly corresponds with the variation in mutual distance and/or size and/or depth of the recesses in the other main surface, whereby a large stud height corresponds with a small mutual distance between the recesses and/or a large size and/or depth of these recesses, and whereby inversely a small stud height corresponds with a large mutual distance between the recesses and/or a small size and/or depth of these recesses.

A body supporting element constructed in this way possesses a large softness and can be provided in a simple way with a three-dimensional main surface and an accompanying variable thickness. Further such a body supporting element can be manufactured in a simple way. Because of the excellent ventilation properties of the mattress as a result of the presence of the ducts, a better moisture dissipation is obtained, so that less dust mites will settle in the mattress. The above described body supporting element may be obtained in a particularly simple way with the process according to the invention.

Further embodiments of the invention are described in the subclaims, and will be elucidated further hereafter by means of an embodiment, with reference to the drawing.
Figure 1 shows a side view of a block of foam material after the first manufacturing step;
Figure 2 shows the block of foam material represented in figure 1, after passing the second manufacturing step;
Figure 3 shows a mattress core obtained from the block of foam material represented in figures 1 and 2, after passing the third manufacturing step;
Figure 4 shows the mattress core represented in figure 3, whereby ducts have been applied which extend mainly perpendicularly to the main surfaces;
Figure 5 shows a cross section of an embodiment of the device by means of which the process can be carried out;
Figure 6 shows a cross view along line 6-6 in figure 5, whereby a block of foam material is at the point of being led through.

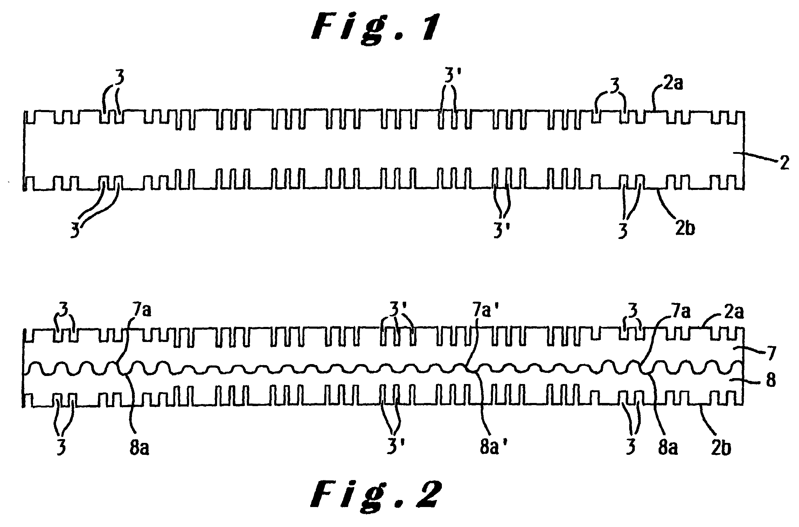

In the following, the process according to the invention will be described with reference to figures 1, 2, 3 and 4, in which the manufacturing of a mattress core is shown. It is however clear, that the process is not limited to the manufacturing of mattresses, but can also be applied to the manufacturing of pillows and the like.

Figure 1 shows a block of foam material 2 that has passed the first manufacturing step. In this first manufacturing step, in the main surfaces 2a, 2b of the block of foam material 2, recesses 3, 3' are applied. As is clearly visible in figure 1, the recesses 3 at the site of the head and foot ends of the mattress are relatively undeep and relatively widely spaced, while the recesses 3' at the site of the hips are relatively deep and more narrowly spaced. It is obvious that the distribution of the recesses shown, only serves as an illustration, and that any desired variation in the depth, the size of and the mutual distance between the recesses is possible. It is also possible that recesses are applied in only one of the main surfaces 2a, 2b.

Figure 2 shows the block of foam material 2 after it has passed the second manufacturing step. The block of foam material 2, in this second manufacturing step has been deformed between two deformation elements 4, 5 while by means of a cutting element 6 the block of foam material 2 has been divided into two block halves 7, 8. The first block half 7 is provided on the one hand with the first main surface 2a, and on the other hand with the third main surface 7a, which is provided with a studded profile. The second block half 8 comprises on the one hand the second main surface 2b and on the other hand a fourth main surface 8a which is provided with a studded profile. As is clearly visible, the amplitude of height of the studded profile at the site of the head and foot ends is considerably larger than at the site of the hip part of the mattress. This is caused by the fact that the recesses 3' at the site of the hip part are deeper and spaced closer together than the recesses 3 at the site of the head and foot ends. Because the recesses 3' at the site of the hip part are relatively deep, and are spaced close to each other, the block of foam material, as a result of the pressure build-up, will deform more easily there, at the site of the first and second main surfaces 2a, 2b, than at the site of the head and foot ends. As a result, the block of foam material is less deformed at the site of the knife at the height of the hip part, than at the height of the head and foot ends, so that the amplitude of the studded profile formed at the hip part is smaller than that of the studded profile at the head and foot ends.

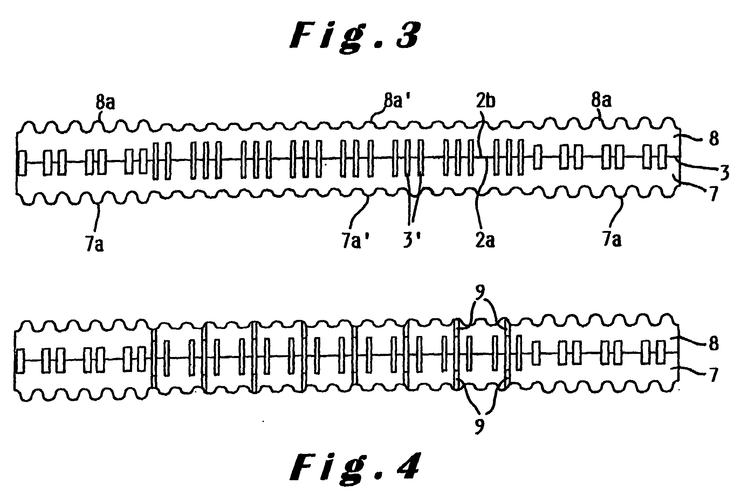

Figure 3 shows a mattress core that is obtained after the third manufacturing step is passed. In this third manufacturing step, both the block halves 7, 8 are connected to each other, so that the first and the second main surfaces 2a, 2b are adjacent to each other and the third and the fourth main surfaces 7a, 8a are turned away from each other. The mattress core 1 thus obtained, has in the present embodiment a greater thickness at the height of the head and foot ends, than at the height of the hip part. In general, in practice it will be precisely at the height of the hip part that a larger thickness is desired. However, the figures only serve to illustrate one embodiment of the invention, and should absolutely not be explained in a limited way. Obviously, also the embodiments in which the hip part has a greater thickness than the head and foot ends, fall within the scope of the invention.

In order to obtain a further improved ventilation, somewhere in the manufacturing process, ducts 9, extending mainly perpendicularly to the main surfaces 2a, 2b, 7a, 8a, and opening into said recesses 3, 3', may be applied. Such ducts 9 ensure an optimal ventilation and an actually breathing mattress. The ducts 9 may be applied in any stage of the process, i.e. prior to the first manufacturing step, between the first and the second manufacturing step, between the second and the third manufacturing step and after the third manufacturing step.

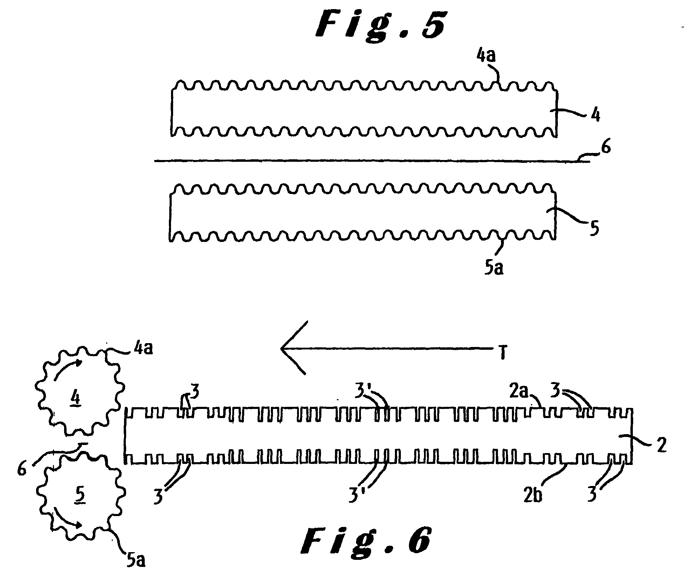

A particularly simple device by means of which the process may be carried out, is represented in the figures 5 and 6. The deformation elements herein are constructed as rotating rollers 4, 5 which at the external jacket surface are provided with a studded profile 4a, 5a. The cutting element 6 by means of which the block of foam material 2 is divided into two block halves 7, 8 is a slender construction and has a length that at least corresponds with the width of the block of foam material 2. The cutting element 6 extends with a main longitudinal axis parallel to the axes of rotation of the rollers 4, 5 and is mounted between both rollers 4, 5. The cutting element may for example be a glowing metal wire, or a knife. Such cutting elements in themselves are known from the art. In figure 6 a cross section view is shown, whereby a block of foam material 2, that is provided at both main surfaces 2a, 2b, with recesses 3, 3', is at the point of being passed between both rollers.

In the present embodiment, the recesses 3, 3' are constructed as grooves extending in the transverse direction of the core 1. A variation of the amplitude of the studded profile of the core to be formed, with the recesses 3, 3' made in this way, is only possible in the longitudinal direction of the mattress. When the thickness of the mattress should be varied in two directions, in the second manufacturing step, with the passage of the block of foam material 2 between both profiled rollers 4, 5, on and/or under the block of foam material a flexible material part may be carried along, so that at least locally a greater compression of the block of foam material 2 is achieved. Such a flexible material part will generally be formed by a plate of foam plastic or foam rubber. In this way, by using a plate of foam material for example, having a smaller thickness than the mattress core to be formed, at the height of the hips, with the exception of the areas along the edge of the core 1, a greater thicknes can be created.

The connection of the block halves to each other in the third manufacturing step, may take place by means of glue. However, the connection may also be achieved by simply placing the mattress halves on each other, with the first and the second main surfaces 2a, 2b facing each other, and subsequently enveloping the core thus obtained with a tick. The tick then ensures that both mattress halves 7, 8 do not shift with respect to each other.

From the above description it shows that the height of the studs on the block halves is at least partially determined by the recesses which are applied prior to the cutting of the block of foam material in the main surfaces of this block. Alternatively, after the cutting of the block of foam material, further recesses may be applied. These recesses then obviously have no more influence on the stud height and are thus exclusively intended for the ventilation of the mattress, or to be alternatively filled up with another foam material, or for air bags and the like to modify the properties of the mattress locally. The size, depth and/or mutual spacing of the recesses applied in the first manufacturing step may in this way be mainly determined as a function of the desired variation in stud height.

For a block of foam with a thickness of 10 to 20 cm, in the process according to the invention, the following parameters may be selected or realised in particular:
- width of the groove-shaped recesses in the first and/or second main surface: 10 to 50 mm, preferably 15 to 20 mm.
- Depth of the groove-shaped recesses in the first and/or second main surface: 10 to 40 mm, preferably 20 to 30 mm.
- Stud height (valley to peak) on the third and/or fourth main surface: 10 to 60 mm, preferably 10 to 25 mm.
- The ratio between stud height and mattress thickness (= thickness of the block of foam material) may vary from 1/20 to 1/2 and preferably from 1/15 to 1/5.

The relationship between the recesses and the stud height depends on different parameters, including pressure on the studded rollers, speed, density and hardness of the used foam material and the like. For a typical polyurethane high resilient foam quality for mattresses, with a 40 % ILD (identation load deflection) value of about 110 according to the ISO 2439B standard, for a block of foam with a thickness of 14 cm and a mutual distance between the groove-shaped recesses of 80 mm, with rollers having an external diameter (end of studs) of 26 cm, a stud height of 8 cm on the rollers and a mutual distance of 30 cm between the axles of the rollers, as a function of the depth of the recesses, the following stud heights on the foam block halves were obtained:
- 10 mm deep recesses: stud height of about 5 mm
- 15 mm deep recesses: stud height of 10 to 12 mm
- 20 mm deep recesses: stud height of 15 to 20 mm
- 25 mm deep recesses: stud height of 20 to 25 mm.

## Claims

1. Process for manufacturing body supporting, flexible foam elements, which are provided on a main surface with a studded profile with varying stud height, which process is started with a block of foam material (2) provided with a first and a second main surface, whereby this block of foam material (2) is at least locally deformed by clamping between two deformation elements (4, 5) provided with a studded profile, whereby between both deformation elements (4, 5) a cutting element (6) is mounted, which cuts the block of foam material (2) at the site of the deformed part in a direction that is mainly parallel to the first and the second main surfaces (2a, 2b), so that a first and a second block half (7, 8) are obtained, which form the said foam elements, whereby the first block half (7) comprises on the one hand the first main surface (2a), and on the other hand a third main surface (7a), which is provided with said studded profile, and whereby the second block half (8) comprises on the one hand the second main surface (2b) and on the other hand a fourth main surface (8a), which is also provided with said studded profile, **characterised in that** said variation in stud height is at least partially obtained by applying in a first manufacturing step, in at least one of the main surfaces (2a, 2b) of the block of foam material, recesses (3, 3') with a varying mutual distance, and/or size and/or depth, whereby the block of foam material (2) provided in this way with recesses, is cut in a second manufacturing step into said block halves (7, 8).

2. Process according to claim 1, **characterised in that** in a third manufacturing step both block halves (7, 8) are connected with each other so that the first and the second main surfaces (2a, 2b) are adjacent to each other and the third and the fourth main surfaces (7a, 8a) are turned away from each other.

3. Process according to claim 2, **characterised in that** the connection of the block halves (7, 8) is achieved by means of glue.

4. Process according to any one of claims 1 to 3, **characterised in that** the deformation elements are constructed as rotating rollers (4, 5) which are provided at the external jacket surface with a studded profile, whereby during the second manufacturing step, the block of foam material (2) is passed under local deformation between both rollers (4, 5).

5. Process according to claim 4, **characterised in that** the cutting element (6) by means of which the block of foam material (2) is divided into two block halves (7, 8), is a slender construction and has a length that at least corresponds with the width of the block of foam material (2), whereby the cutting element (6) extends with a main longitudinal axis parallel to the axes of rotation of the rollers (4, 5) and is mounted between both rollers (4, 5).

6. Process according to claim 4 or 5, **characterised in that** in the second manufacturing step with the passage of the block of foam material (2) between the profiled rollers (4, 5), a flexible material part is carried along, so that at least locally a greater compression of the block of foam material (2) is achieved.

7. Process according to any one of the preceding claims, **characterised in that** the recesses (3, 3') are made as grooves extending in the transverse direction of the block of foam material.

8. Process according to any one of the preceding claims, **characterised in that** ducts (9) extending mainly perpendicularly to the main surfaces (2a, 2b, 7a, 8a) are applied, which open into the said recesses (3, 3').

9. Body supporting flexible foam element with two main surfaces, one of which is provided with a studded profile with a varying stud height, **characterised in that** in the other main surface located opposite the main surface provided with a studded profile, recesses are applied with a varying mutual distance, and/or size and/or depth.

10. Body supporting element according to claim 9, **characterised in that** the variation of stud height over the main surface provided with a studded profile, corresponds with the variation in mutual distance, and/or size and/or depth of the recesses in the other main surface, whereby a large stud height corresponds with a small mutual distance between the recesses, and/or a large size and/or depth of these recesses, and whereby inversely a small stud height corresponds with a large mutual distance between the recesses, and/or a small size and/or depth of these recesses.

## Patentansprüche

1. Verfahren zur Herstellung von den Körper stützenden, flexiblen Schaumelementen, die auf einer Hauptfläche mit einem Noppenprofil mit variierender Noppenhöhe ausgestattet sind, wobei das Verfahren mit einem Schaumblock (2) mit einer ersten und einer zweiten Hauptfläche beginnt, wobei dieser Schaumblock (2) zumindest lokal durch Einklemmen zwischen zwei mit einem Noppenprofil versehenen Verformungselementen (4, 5) verformt wird, wobei zwischen den beiden Verformungselementen (4, 5) ein Schneidelement (6) montiert ist, das den Schaumblock (2) an der Stelle des verformten Teils in eine Richtung schneidet, die hauptsächlich parallel zur ersten und zur zweiten Hauptfläche (2a, 2b) ist, sodass eine erste und eine zweite Blockhälfte (7, 8) erreicht werden, die die erwähnten Schaumelemente bilden, wobei die erste Blockhälfte (7) einerseits die erste Hauptfläche (2a) und andererseits eine dritte Hauptfläche (7a) umfasst, die das erwähnte Noppenprofil aufweist, und wobei die zweite Blockhälfte (8) einerseits die zweite Hauptfläche (2b) und andererseits eine vierte Hauptfläche (8a) umfasst, die auch das erwähnte Noppenprofil aufweist, **dadurch gekennzeichnet, dass** die erwähnte Variation in der Noppenhöhe zumindest teilweise erreicht wird, indem in einem ersten Herstellungsschritt, in zumindest einer der Hauptflächen (2a, 2b) des Schaumblocks, Aussparungen (3, 3') mit variierendem Abstand zu einander und/oder variierender Größe und/oder Tiefe angebracht werden, wobei der Schaumblock (2), der so mit Aussparungen versehen wird, in einem zweiten Herstellungsschritt in die erwähnten Blockhälften (7, 8) geschnitten wird.

2. Verfahren nach Anspruch 1, **dadurch gekennzeichnet, dass** in einem dritten Herstellungsschritt die beiden Blockhälften (7, 8) mit einander verbunden werden, sodass die erste und die zweite Hauptfläche (2a, 2b) neben einander liegen und die dritte und die vierte Hauptfläche (7a, 8a) von einander weg gedreht sind.

3. Verfahren nach Anspruch 2, **dadurch gekennzeichnet, dass** die Verbindung der Blockhälften (7, 8) durch Leim erreicht wird.

4. Verfahren nach einem der Ansprüche 1 bis 3, **dadurch gekennzeichnet, dass** die Verformungselemente als rotierende Rollen (4, 5) konstruiert sind, die auf der Außenmantelfläche mit einem Noppenprofil versehen sind, wobei der Schaumblock (2) während des zweiten Herstellungsschrittes unter lokaler Verformung zwischen den beiden Rollen (4, 5) durchgeschoben wird.

5. Verfahren nach Anspruch 4, **dadurch gekennzeichnet, dass** das Schneidelement (6), durch das der Schaumblock (2) in zwei Blockhälften (7, 8) getrennt wird, eine schlanke Konstruktion ist und eine Länge hat, die zumindest der Breite des Schaumblocks (2) entspricht, wobei das Schneidelement (6) sich mit einer Hauptlängsachse parallel zu den Rotationsachsen der Rollen (4, 5) ausstreckt und zwischen den beiden Rollen (4, 5) montiert ist.

6. Verfahren nach einem der Ansprüche 4 oder 5, **dadurch gekennzeichnet, dass** im zweiten Herstellungsschritt mit der Durchführung des Schaumblocks (2) zwischen den Profilrollen (4, 5) ein flexibler Materialteil mitgeführt wird, sodass zumindest lokal eine größere Kompression des Schaumblocks (2) erzielt wird.

7. Verfahren nach einem der vorigen Ansprüche, **dadurch gekennzeichnet, dass** die Aussparungen (3, 3') als Schlitze angefertigt sind, die sich in die Querrichtung des Schaumblocks ausdehnen.

8. Verfahren nach einem der vorigen Ansprüche, **dadurch gekennzeichnet, dass** Kanäle (9), die sich hauptsächlich lotrecht auf die Hauptflächen (2a, 2b, 7a, 8a) ausdehnen, angebracht werden, die in die erwähnten Aussparungen (3, 3') münden.

9. Den Körper stützendes flexibles Schaumelement mit zwei Hauptflächen, von denen eine mit einem Noppenprofil mit variierender Noppenhöhe versehen ist, **dadurch gekennzeichnet, dass** in der anderen Hauptfläche, die sich gegenüber der mit einem Noppenprofil versehenen Hauptfläche befindet, Aussparungen mit variierendem Abstand zu einander und/oder variierender Größe und/oder Tiefe angebracht sind.

10. Den Körper stützendes Element nach Anspruch 9, **dadurch gekennzeichnet, dass** die Variation der Noppenhöhe über die mit einem Noppenprofil versehene Hauptfläche der Variation in Abstand zu einander und/oder Größe und/oder Tiefe der Aussparungen in der anderen Hauptfläche entspricht, wobei eine große Noppenhöhe einem geringen Abstand zwischen den Aussparungen und/oder einer großen Größe und/oder Tiefe dieser Aussparungen entspricht, und wobei umgekehrt eine geringe Noppenhöhe einem großen Abstand zwischen den Aussparungen und/oder einer kleinen Größe und/oder Tiefe dieser Aussparungen entspricht.

## Revendications

1. Procédé de fabrication d'éléments de support de corps en mousse flexible qui sont pourvus, sur une surface principale, d'un profil nervuré présentant une hauteur de nervure variable, ce procédé étant démarré avec un bloc de matière mousse (2) pourvu d'une première et d'une deuxième surfaces principales, ce bloc de matière mousse (2) étant au moins localement déformé par serrage entre deux éléments de déformation (4, 5) pourvus d'un profil nervuré, un élément de coupe (6) étant monté entre les deux éléments de déformation (4, 5) et coupant le bloc de matière mousse (2) à l'endroit de la partie déformée suivant une direction qui est principalement parallèle à la première et à la deuxième surfaces principales (2a, 2b), de façon à obtenir une première et une deuxième moitiés de bloc (7, 8) qui forment lesdits éléments de mousse, la première moitié de bloc (7) comprenant, d'une part, la première surface principale (2a) et, d'autre part, une troisième surface principale (7a) qui est pourvue dudit profil nervuré, la deuxième moitié de bloc (8) comprenant, d'une part, la deuxième surface principale (2b) et, d'autre part, une quatrième surface principale (8a) qui est également pourvue dudit profil nervuré, **caractérisé en ce que** ladite variation de hauteur de nervure est au moins partiellement obtenue par application dans une première étape de fabrication, dans au moins une des surfaces principales (2a, 2b) du bloc de matière mousse, d'évidements (3, 3') présentant mutuellement une distance et/ou taille et/ou profondeur variable, le bloc de matière mousse (2) pourvu de cette manière d'évidements étant coupé, dans une seconde étape de fabrication, en lesdites moitiés de bloc (7, 8).

2. Procédé suivant la revendication 1, **caractérisé en ce que**, dans une troisième étape de fabrication, les deux moitiés de bloc (7, 8) sont reliées l'une à l'autre de façon que la première et la seconde surfaces principales (2a, 2b) soient adjacentes l'une à l'autre et que la troisième et la quatrième surfaces principales (7a, 8a) soient tournées à l'écart l'une de l'autre.

3. Procédé suivant la revendication 2, **caractérisé en ce que** la liaison entre les moitiés de bloc (7, 8) est obtenue au moyen de colle.

4. Procédé suivant l'une quelconque des revendications 1 à 3, **caractérisé en ce que** les éléments de déformation sont construits sous la forme de rouleaux rotatifs (4, 5) qui sont pourvus sur la surface d'enveloppe externe d'un profil nervuré, le bloc de matière mousse (2) étant, pendant la deuxième étape de fabrication, passé entre les deux rouleaux (4, 5) avec une déformation locale.

5. Procédé suivant la revendication 4, **caractérisé en ce que** l'élément de coupe (6) au moyen duquel le bloc de matière mousse (2) est divisé en deux moitiés de bloc (7, 8) est une construction mince et **en ce qu'**il a une longueur qui correspond au moins à la largeur du bloc de matière mousse (2), l'élément de coupe (6) s'étendant avec un axe longitudinal principal parallèlement aux axes de rotation des rouleaux (4, 5) et étant monté entre les deux rouleaux (4, 5).

6. Procédé suivant l'une des revendications 4 et 5, **caractérisé en ce que**, dans la deuxième étape de fabrication avec le passage du bloc de matière mousse (2) entre les rouleaux profilés (4, 5), une partie de matière flexible est supportée de façon qu'au moins localement une plus grande compression du bloc de matière mousse (2) soit obtenue.

7. Procédé suivant l'une quelconque des revendications précédentes, **caractérisé en ce que** les évidements (3, 3') sont réalisés sous la forme de gorges qui s'étendent dans la direction transversale du bloc de matière mousse.

8. Procédé suivant l'une quelconque des revendications précédentes, **caractérisé en ce que** des conduits (9) s'étendant principalement perpendiculairement aux surfaces principales (2a, 2b, 7a, 8a) sont appliqués, ces conduits débouchant dans lesdits évidements (3, 3').

9. Elément de support de corps en mousse flexible présentant deux surfaces principales, dont l'une est pourvue d'un profil nervuré ayant une hauteur de nervure variable, **caractérisé en ce que**, dans l'autre surface principale localisée à l'opposé de la surface principale pourvue d'un profil nervuré, des évidements sont appliqués qui présentent mutuellement une distance et/ou taille et/ou profondeur variables.

10. Elément de support de corps suivant la revendication 9, **caractérisé en ce que** la variation de hauteur de nervure sur la surface principale pourvue d'un profil nervuré correspond à la variation de distance et/ou taille et/ou profondeur mutuelles des évidements dans l'autre surface principale, une grande hauteur de nervure correspondant à une petite distance mutuelle entre les évidements et/ou à une grande taille de ces évidements et/ou à une grande profondeur de ceux-ci, et inversement une petite hauteur de nervure correspondant à une grande distance mutuelle entre les évidements et/ou à une petite taille de ces évidements et/ou à une petite profondeur de ceux-ci.
